# FASCICULE DE BREVET EUROPEEN

(11) **EP 1 870 976 B1**
(45) Date de publication et mention de la délivrance du brevet: **28.10.2015**
(21) Numéro de dépôt: 07356082.3
(22) Date de dépôt: 15.06.2007
(51) Int. Cl.: H02H 9/04

(54) **Dispositif de protection contre les surtensons à capacité améliorée de mise en sécurité par déconnexion et procédé correspondant**
Vorrichtung zum Schutz gegen Überspannungen mit verbesserter Fähigkeit zur Notabsperrung durch Abschalten und entsprechendes Verfahren
Device for protecting against voltage surges with improved capacity for securing by disconnection and corresponding method

(30) Priorité: 20.06.2006 FR 0605501
(43) Date de publication de la demande: 26.12.2007
(73) Titulaire: ABB France, 95800 Cergy Saint Christophe (FR)
(72) Inventeur: Lindeperg, Hervé, 67000 Strasbourg (FR); Crevenat, Vincent André Lucien, 65250 Izaux (FR); Lagnoux, Alain René Robert, 65140 Rabastens de Bigorre (FR)
(74) Mandataire: Hirsch & Associés

(56) Documents cités:
- EP-A- 0 350 477
- EP-A1- 0 326 903
- US-A1- 5 617 288

## Description

La présente invention se rapporte au domaine technique général des dispositifs de protection d'installations et d'équipements électriques contre les surtensions électriques, notamment transitoires telles que celles dues à la foudre.

La présente invention concerne plus particulièrement un dispositif de protection d'une installation électrique contre les surtensions comportant d'une part au moins un composant de protection destiné à être raccordé à ladite installation électrique, tel qu'une varistance, ledit composant de protection étant susceptible d'être traversé par un courant électrique de décharge lorsqu'il est raccordé à l'installation électrique, et d'autre part un moyen de déconnexion apte, lorsqu'il est activé, à déconnecter ledit composant de protection de ladite installation électrique.

L'invention concerne également un procédé de surveillance d'un dispositif de protection d'une installation électrique contre les surtensions comportant d'une part au moins un composant de protection destiné à être raccordé à ladite installation électrique, tel qu'une varistance, ledit composant de protection étant susceptible d'être traversé par un courant électrique de décharge lorsqu'il est raccordé à l'installation électrique, et d'autre part un moyen de déconnexion apte, lorsqu'il est activé, à déconnecter ledit composant de protection de ladite installation électrique.

Il est désormais classique d'avoir recours à des dispositifs de protection pour protéger des appareils ou installations électriques ou électroniques contre des surtensions transitoires pouvant être par exemple générées par des décharges dues à un impact de foudre.

Ces dispositifs de protection comportent, d'une manière générale, un ou plusieurs composants de protection contre les surtensions, tel que par exemple une varistance. Lorsque le ou les composants sont exposés à des tensions supérieures à une valeur seuil prédéterminée, ils sont susceptibles d'écouler le courant de défaut (état dit *« passant* »), par exemple à la terre, tout en écrêtant la surtension à une valeur compatible avec la tenue de l'installation et des équipements qui y sont raccordés.

Les dispositifs de protection utilisant des varistances sont généralement connectés entre une phase à protéger et le neutre, ou la terre, ou une autre phase (cas d'une protection différentielle) et soumis, en régime normal de fonctionnement, à une tension d'alimentation alternative sous laquelle la varistance présente normalement une impédance très élevée (état dit *« bloquant* »). L'impédance de la varistance dans son état bloquant est telle que, sous la tension normale d'alimentation, le courant électrique qui parcourt ladite varistance, dit *« courant de fuite* », est d'intensité négligeable, usuellement inférieure à 100 microampères.

Il est bien connu que les dispositifs de protection comportant une varistance présentent des risques de défaillance liés à la dégradation de ce composant de protection. En particulier, lorsque la varistance vieillit ou est endommagée par une exposition à des conditions de tension et/ou de courant qui dépassent ses capacités structurelles de tenue électrique et/ou thermique, celle-ci peut subir une altération de son pouvoir d'isolement, c'est-à-dire voir son impédance réduite de telle sorte que son état devient passant même sous des conditions normales d'alimentation.

La réduction, voire l'effondrement, de l'impédance de la varistance, et plus particulièrement de sa résistance électrique, se traduit par une élévation de l'intensité du courant de fuite qui traverse celle-ci. Outre le déséquilibre qu'est susceptible d'engendrer la présence d'un tel courant vis-à-vis de l'installation et/ou du réseau d'alimentation, ce phénomène peut conduire à des échauffements importants. Or, toute élévation excessive de la température est potentiellement dangereuse pour l'environnement tant matériel qu'humain du composant, du fait que celle-ci est susceptible d'occasionner par exemple une destruction des composants voisins de la varistance par fusion, voire une inflammation à l'origine d'un sinistre, et qu'elle expose l'utilisateur à un risque de brûlure accidentelle.

Pour éviter de telles conséquences néfastes, ou tout du moins en limiter les effets, les dispositifs de protection contre les surtensions sont généralement pourvus de moyens de déconnexion thermiques destinés à isoler électriquement le ou les composants de protection de l'installation électrique en cas d'échauffement excessif de ces derniers.

Les moyens de déconnexion thermiques peuvent ainsi comporter un moyen de détection formé par un élément sensible à la température du composant de protection, tel qu'une soudure fusible, qui commande l'ouverture d'un contact placé en série avec les moyens de raccordement du composant de protection à l'installation électrique.

De tels moyens de déconnexion offrent une protection satisfaisante vis-à-vis d'une défaillance progressive du composant de protection, comme cela est le cas lors de la dégradation de la varistance par vieillissement normal. Ce dernier s'accompagne en effet d'un phénomène dit d' « *emballement thermique »* qui s'étale usuellement sur une durée relativement longue, notamment de plusieurs minutes, voire de plusieurs dizaines de minutes, au cours de laquelle la varistance devient progressivement passante et voit sa température s'élever de façon relativement lente et sensiblement homogène. En la circonstance, les moyens de déconnexion connus sont aptes à se déclencher avant que la température du composant n'atteigne un seuil critique de dangerosité (par exemple le point de fusion ou d'inflammation d'un composant environnant).

Toutefois, de tels moyens de déconnexion se révèlent en général inappropriés dans les cas où une défaillance soudaine conduit à un échauffement rapide du composant de protection. En effet, la réactivité des moyens de déconnexion thermique connus se fonde sur des temps de réponse caractéristiques des phénomènes de transfert de chaleur, en particulier ceux impliqués dans le changement d'état du matériau constitutif de la soudure fusible. L'inertie temporelle de tels phénomènes est sensiblement incompatible avec une détection précoce d'un dysfonctionnement du composant dont les effets se manifesteraient brusquement, en particulier en un point éloigné du moyen de détection. Ainsi, une dégradation brutale de la varistance est susceptible de conduire à un échauffement dangereux, de celle-ci ou d'un élément de circuit, avant que les moyens de déconnexion thermiques présents n'aient pu ouvrir le circuit d'alimentation afin de couper le courant qui se trouve à l'origine dudit échauffement.

Or, les réseaux de distribution électrique peuvent être soumis, en sus des surtensions transitoires dont la durée est de l'ordre de quelques dizaines à quelques centaines de microsecondes, à des surtensions temporaires de même fréquence que celle du réseau dont la durée est sensiblement plus longue et généralement comprise entre plusieurs centaines de millisecondes et plusieurs minutes. Ces phénomènes perturbateurs, désignés usuellement par l'acronyme « *TOV»* pour *« Temporary OverVoltage* », affectent notamment les réseaux de distribution mal stabilisés du fait de leur vétusté ou de leur conception non régie par des normes strictes, et sont de nature à provoquer une dégradation rapide des varistances. Empiriquement, il s'avère que le temps nécessaire à la destruction - prématurée - d'une varistance exposée à une TOV dépassant sa tension normale de fonctionnement est de l'ordre de quelques dizaines de millisecondes. L'échauffement qui en résulte est généralement tout aussi rapide, très localisé et situé aléatoirement.

Afin d'améliorer la rapidité de la déconnexion, plusieurs moyens sont connus. Une première possibilité consiste, selon une disposition constructive fréquemment employée, à placer le moyen de détection de l'échauffement au plus près de la varistance, et plus particulièrement de l'accoler sensiblement au centre de celle-ci. Une telle disposition se révèle toutefois inefficace lorsque l'échauffement se produit rapidement en un point éloigné dudit moyen de détection, de telle sorte qu'une température critique peut être localement atteinte avant que la chaleur ait pu parvenir audit moyen de détection.

Dans le cas où une soudure fusible est employée comme moyen de détection de l'échauffement, il est également connu de réduire le point de fusion de celle-ci, notamment par le choix de composants d'alliage spécifiques. Toutefois, cette solution est susceptible de se heurter aux normes environnementales qui interdisent l'emploi de certains matériaux pour la constitution d'alliages fusibles. De plus, elle présente fréquemment une incompatibilité avec les autres contraintes techniques régissant la mise en oeuvre du dispositif de protection, en particulier avec la tenue aux courants d'écoulement des surtensions transitoires dues à la foudre, lesquels sont très brefs mais d'intensité élevée. En d'autres termes, une modification qualitative de la soudure fusible est susceptible d'affecter le *« pouvoir de décharge »* du dispositif, c'est-à-dire l'intensité maximale du courant que ledit dispositif peut écouler, plusieurs fois de suite, sans être endommagé.

Par ailleurs, afin de préserver la varistance des dégradations brutales dues aux TOV, il est connu de l'homme du métier d'augmenter la tension normale de fonctionnement de ladite varistance par un dimensionnement approprié de cette dernière, de telle sorte que ladite tension normale de fonctionnement soit supérieure ou égale aux niveaux de tensions des TOV prévisibles. Si une telle disposition permet effectivement de rendre la varistance moins sensible aux TOV, elle présente par contre l'inconvénient majeur de dégrader significativement le niveau de protection de l'installation offert par la varistance vis-à-vis des surtensions transitoires notamment dues à la foudre. En effet, ce décalage du point de fonctionnement de la varistance en mode bloquant induit également celui du seuil de basculement en mode passant, si bien que les surtensions sont alors écrêtées à un niveau de tension plus élevé.

Dans le domaine, on connaît EP0326903 qui divulgue un moyen d'analyse permettant d'appliquer un traitement à un signal de manière à pouvoir déterminer si le courant de décharge est de nature transitoire ou de nature temporaire

Les objets assignés à l'invention visent par conséquent à porter remède aux différents inconvénients énumérés précédemment et à proposer un nouveau dispositif de protection d'installations électriques contre les surtensions qui soit susceptible de détecter une défaillance du composant de protection, ou l'apparition de conditions propices à une telle défaillance, et de déconnecter ledit composant de protection plus rapidement qu'avec les moyens de déconnexion thermiques connus, tout en présentant un pouvoir de décharge optimisé.

Un autre objet de l'invention vise à proposer un nouveau dispositif de protection d'installations électriques contre les surtensions qui soit de conception simple et fiable.

Un autre objet de l'invention vise à proposer un dispositif de protection contre les surtensions dont la sensibilité peut être ajustée en fonction des conditions d'utilisation.

Un autre objet assigné à l'invention vise à proposer qui garantisse une bonne continuité de protection.

Un autre objet assigné à l'invention vise à proposer un nouveau dispositif de protection contre les surtensions qui soit particulièrement robuste, notamment vis-à-vis des TOV, et dont la longévité soit optimisée.

Un autre objet de l'invention vise à proposer un procédé de surveillance d'un dispositif de protection d'une installation électrique contre les surtensions qui permette la préservation dudit dispositif et/ou à tout le moins sa mise en sécurité rapide et fiable en cas de défaillance, tout en optimisant son pouvoir de décharge.

Enfin, un autre objet assigné à l'invention vise à proposer un nouveau procédé qui optimise l'utilisation et la longévité du ou des composants de protection présents au sein d'un dispositif de protection contre les surtensions.

Les objets assignés à l'invention sont atteints à l'aide d'un dispositif de protection d'une installation électrique contre les surtensions comportant d'une part au moins un composant de protection destiné à être raccordé à ladite installation électrique, telle qu'une varistance, ledit composant de protection étant susceptible d'être traversé par un courant électrique de décharge lorsqu'il est raccordé à l'installation électrique, et d'autre part un moyen de déconnexion apte, lorsqu'il est activé, à déconnecter ledit composant de protection de ladite installation électrique, caractérisé en ce qu'il comprend :
- un moyen d'acquisition apte à fournir un signal Iₘₑₛ représentatif de l'intensité dudit courant de décharge en fonction du temps t ;
- un moyen d'analyse permettant d'appliquer un traitement audit signal Iₘₑₛ de manière à pouvoir déterminer si le courant de décharge est de nature transitoire ou de nature temporaire;
- un moyen d'activation sélectif apte à activer ou non le moyen de déconnexion en fonction de la nature du courant de décharge déterminée par le moyen d'analyse.

Les objets assignés à l'invention sont également atteints à l'aide d'un procédé de surveillance d'un dispositif de protection d'une installation électrique contre les surtensions comportant d'une part au moins un composant de protection destiné à être raccordé à ladite installation électrique, telle qu'une varistance, ledit composant de protection étant susceptible d'être traversé par un courant électrique de décharge lorsqu'il est raccordé à l'installation électrique, et d'autre part un moyen de déconnexion apte, lorsqu'il est activé, à déconnecter ledit composant de protection de ladite installation électrique, caractérisé en ce qu'il comporte :
- une étape (a) d'acquisition au cours de laquelle on acquiert un signal Iₘₑₛ représentatif de l'intensité dudit courant de décharge en fonction du temps t,
- une étape (b) d'analyse au cours de laquelle on applique un traitement audit signal Iₘₑₛ de manière à pouvoir déterminer si le courant de décharge est de nature transitoire ou de nature temporaire,
- une étape (c) d'activation sélective au cours de laquelle on active ou non le moyen de déconnexion en fonction de la nature du courant de décharge déterminée lors de l'étape (b) d'analyse.

D'autres particularités et avantages de l'invention apparaîtront plus en détails à la lecture de la description qui suit, ainsi qu'à l'aide des dessins annexés fournis à titre purement illustratif et non limitatif, parmi lesquels :
- la figure 1 représente un schéma électrique de raccordement à une installation électrique d'un dispositif de protection contre les surtensions conforme à l'invention.
- La figure 2 illustre un schéma de principe fonctionnel d'un dispositif de protection contre les surtensions conforme à l'invention.
- La figure 3 représente le schéma électrique d'une variante préférentielle de réalisation du moyen de déconnexion d'un dispositif de protection contre les surtensions conforme à l'invention.
- La figure 4 représente le schéma électrique d'une seconde variante de réalisation du moyen de déconnexion d'un dispositif de protection contre les surtensions conforme à l'invention.
- La figure 5a représente schématiquement deux courbes d'intensité du courant de décharge qui traverse un composant de protection d'un dispositif conforme à l'invention en fonction du temps, lesdites courbes correspondant respectivement à un phénomène de surtension transitoire et à un phénomène de surtension temporaire véhiculant une même énergie.
- La figure 5b représente schématiquement le résultat d'un traitement de signal conforme à l'invention lorsque celui-ci est appliqué à un phénomène de surtension temporaire.
- La figure 5c représente schématiquement le résultat d'un traitement de signal conforme à l'invention lorsque celui-ci est appliqué à un phénomène de surtension transitoire.

Le dispositif de protection 1 contre les surtensions conforme à l'invention est destiné à être branché en dérivation sur l'équipement ou l'installation électrique 2 à protéger.

L'expression « *installation électrique* » fait référence à tout type d'appareil ou réseau alimenté électriquement et susceptible de subir des perturbations de tensions, notamment des surtensions transitoires dues à la foudre.

Le dispositif de protection 1 peut donc avantageusement constituer un dispositif de protection contre les surtensions transitoires dues à la foudre, c'est-à-dire un *« parafoudre* ».

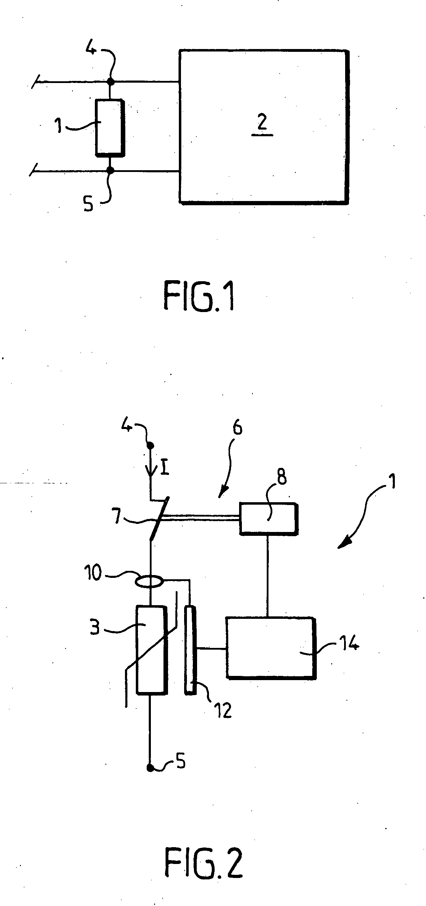

Le dispositif de protection 1 conforme à l'invention peut être disposé entre une phase de l'installation 2 à protéger et la terre, ou, sans pour autant sortir du cadre de l'invention, entre le neutre et la terre, entre la phase et le neutre ou encore entre deux phases dans le cas d'une protection différentielle, tel que cela est illustré sur la figure 1.

Le dispositif de protection 1 conforme à l'invention comporte au moins un composant de protection 3, tel qu'une varistance, destiné à être raccordé à l'installation électrique à protéger 2 au niveau de moyens de raccordement électrique 4, 5.

Dans la suite de la description, on considérera que chaque composant de protection 3 est formé par une varistance, étant entendu que l'utilisation d'une varistance n'est indiquée qu'à titre d'exemple préférentiel et ne constitue en aucune manière une limitation de l'invention.

Lorsqu'il est raccordé à l'installation électrique 2, le composant de protection 3 est susceptible d'être traversé par un courant électrique de décharge I.

Dans le cadre d'un fonctionnement normal du dispositif 1, et en l'absence de surtension, ledit courant électrique de décharge est faible voire sensiblement nul. Ce courant électrique de décharge est toutefois susceptible d'atteindre des valeurs élevées, notamment lorsque le composant de protection 3 écrête une surtension ou encore lorsque son impédance diminue du fait d'une dégradation provoquée par exemple par un vieillissement normal ou par l'application d'une surtension temporaire (TOV).

Le dispositif de protection 1 conforme à l'invention comporte également un moyen de déconnexion 6 apte, lorsqu'il est activé, à déconnecter le composant de protection 3 de l'installation électrique 2.

Ledit moyen de déconnexion 6 est ainsi susceptible de passer d'une configuration désactivée, dans laquelle il autorise la liaison électrique du composant 3 à l'installation 2, à une configuration activée dans laquelle il interrompt ladite liaison électrique.

Le moyen de déconnexion 6 pourra avantageusement comporter un élément de contact 7 mobile entre une position de fermeture dans laquelle la varistance 3 est reliée électriquement à l'installation 2 et une position d'ouverture dans laquelle ladite varistance 3 est isolée électriquement de ladite installation 2.

Le moyen de déconnexion 6 peut comporter également un moyen d'actionnement 8 apte à piloter le passage du moyen de contact 7 de sa position de fermeture vers sa position d'ouverture, et/ou inversement, de sa position d'ouverture vers sa position de fermeture.

Le moyen d'actionnement 8 peut par exemple être formé par un actionneur électromécanique apte à entraîner l'élément de contact 7 par le biais d'une liaison mécanique tel qu'une tringle ou une bielle. Toutefois, selon une variante préférentielle de réalisation, l'élément de contact 7 se trouve précontraint vers sa position d'ouverture à l'aide d'un moyen de rappel, tel qu'un ressort, et est maintenu en position de fermeture par un moyen de retenue faisant obstacle à son déplacement, le moyen d'actionnement 8 étant apte à manoeuvrer en retrait ledit moyen de retenue de manière à libérer le mouvement de l'élément de contact 7.

Selon une caractéristique importante de l'invention, le dispositif de protection 1 comprend en outre un moyen d'acquisition 10 apte à fournir un signal Iₘₑₛ représentatif de l'intensité du courant de décharge qui traverse le composant de protection 3 en fonction du temps t. En d'autres termes, le moyen d'acquisition 10 permettra de mesurer ou d'évaluer une ou plusieurs grandeurs caractéristiques du courant électrique qui circule dans la varistance 3, notamment l'intensité dudit courant en fonction du temps, en traduisant ces grandeurs caractéristiques sous forme d'un signal image porteur des informations nécessaires à leur évaluation.

Avantageusement, l'acquisition et l'exploitation d'une information portant sur l'intensité du courant électrique de décharge qui traverse le composant de protection 3 permet de surveiller directement les causes d'un échauffement dudit composant de protection 3. Ainsi, il est possible de diagnostiquer une défaillance de ce dernier en détectant les symptômes immédiats d'un dysfonctionnement (énergie électrique absorbée), soit bien plus rapidement qu'avec des moyens d'évaluation thermique qui surveillent les effets de la conversion de l'énergie électrique en énergie thermique, c'est-à-dire qui exploitent une manifestation secondaire et tardive du phénomène.

Selon une variante de réalisation préférentielle, le moyen d'acquisition 10 comportera un capteur de type inductif 11. Au besoin, le moyen d'acquisition 10 pourra également comprendre un filtre et/ou un moyen amplificateur et/ou un moyen convertisseur.

Selon une caractéristique importante de l'invention, le dispositif de protection 1 comprend également un moyen d'analyse 12 permettant d'appliquer un traitement au signal Iₘₑₛ représentatif de l'intensité du courant de décharge de manière à pouvoir déterminer la nature dudit courant de décharge.

Selon une variante de réalisation préférentielle, le moyen d'analyse 12 est notamment apte à déterminer si le composant de protection 3 est, ou a été, traversé par un courant de décharge de nature transitoire ou par un courant de décharge de nature plus durable, notamment temporaire.

Ainsi, le moyen d'analyse 12 conforme à l'invention permet de discriminer les courants de décharge, en identifiant si leur durée caractéristique correspond à celle d'un phénomène transitoire ou à celle d'un phénomène temporaire.

Selon une autre caractéristique importante de l'invention, le dispositif de protection 1 comprend en outre un moyen d'activation sélectif 14 apte à activer ou non le moyen de déconnexion 6 en fonction de la nature du courant de décharge qui a été déterminée par le moyen d'analyse 12.

Selon une variante de réalisation préférentielle, le moyen d'activation sélective 14 n'active pas le moyen de déconnexion 6 lorsque le moyen d'analyse 12 détermine que le courant de décharge est de nature transitoire.

En effet, la tenue électrique, thermique et mécanique du composant de protection 3 dépend non seulement de la quantité d'énergie électrique qui lui est fournie mais également de la durée nécessaire à l'administration de cette énergie. Ainsi, une même quantité d'énergie électrique, selon qu'elle sera véhiculée par un phénomène transitoire tel qu'une surtension due à la foudre ou par un phénomène plus durable tel qu'une surtension temporaire (TOV) sera dans le premier cas susceptible d'être écoulée sans dommage par le composant de protection 3, tandis qu'elle aura un effet destructeur irréversible sur ledit composant 3 dans le second cas.

Avantageusement, le dispositif conforme à l'invention est donc apte à reconnaître divers types de courants de décharge et capable d'adapter son comportement, et plus précisément l'activation du moyen de déconnexion, en fonction de la distinction qu'il opère entre lesdits types de courants de décharge.

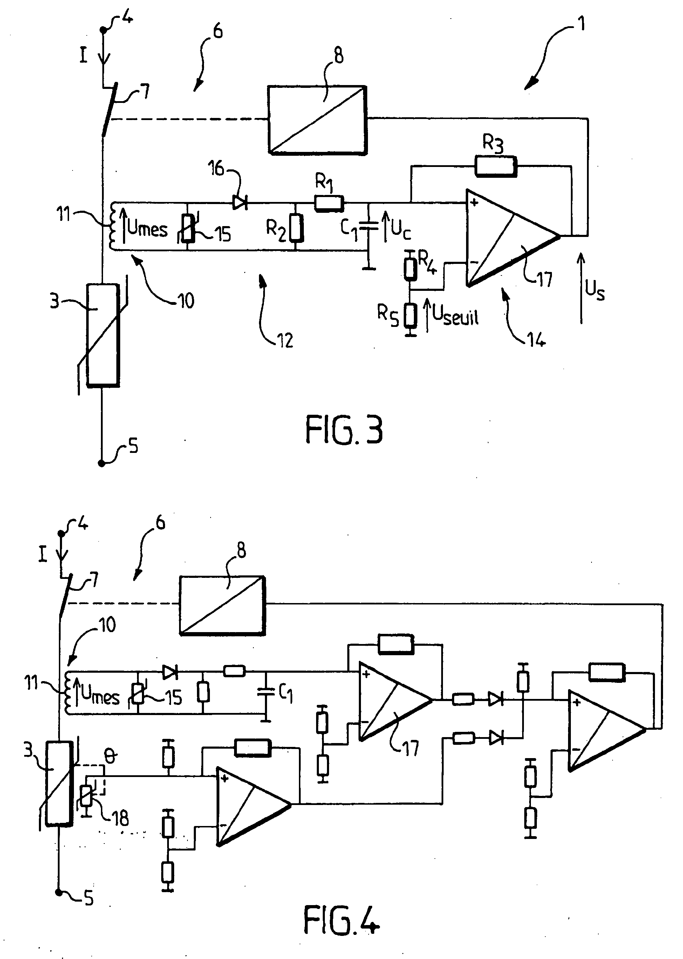

Selon un premier mode de réalisation préférentiel, illustré notamment sur la figure 3, le moyen d'analyse 12 est conçu pour effectuer un bornage supérieur du signal Iₘₑₛ représentatif de l'intensité du courant de décharge, la valeur dudit signal ne pouvant alors excéder un maximum prédéfini noté Iₛᵤₚ.

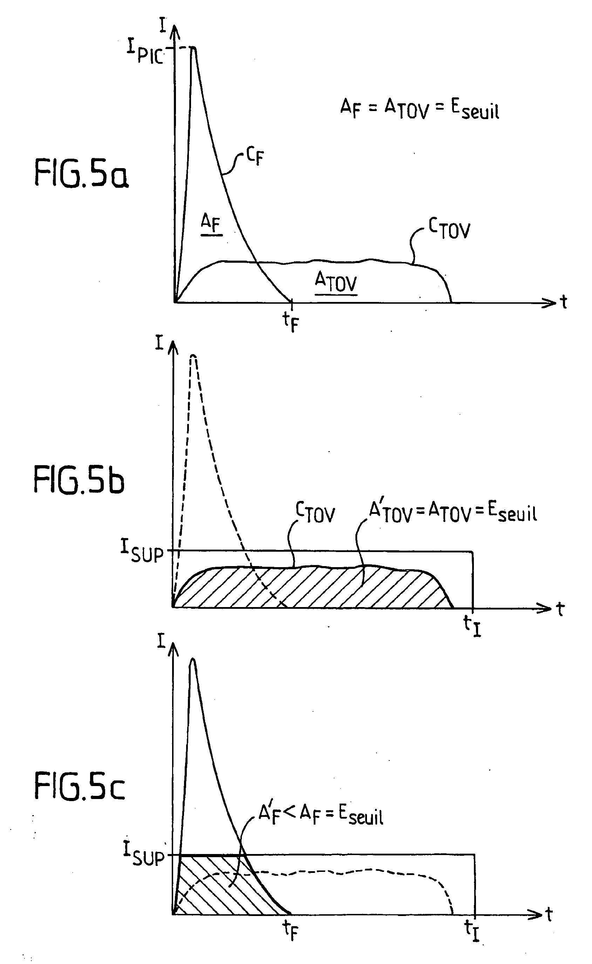

Ainsi que cela est illustré sur la figure 5c, on majore la valeur du signal Iₘₑₛ par une valeur maximale Iₛᵤₚ de préférence choisie sensiblement inférieure à l'intensité de pic correspondant à un courant de décharge admissible provoqué par une surtension due à la foudre.

A cet effet, le moyen d'acquisition 10 fournit de préférence le signal Iₘₑₛ de l'intensité du courant qui traverse le composant de protection 3 sous la forme d'une tension électrique Uₘₑₛ tandis que le moyen d'analyse 12 comprend un élément limiteur de tension, tel qu'une varistance d'écrêtage 15, afin d'empêcher la valeur de ladite tension Uₘₑₛ de dépasser une valeur maximale prédéterminée.

Plus précisément, ainsi que cela est illustré sur la figure 3, le moyen d'acquisition 12 peut associer, en parallèle, un capteur inductif 11 à une varistance d'écrêtage 15 de manière à ce que, quelle que soit l'intensité réelle du courant de décharge traversant le composant de protection 3, en particulier lors de pics dus à des décharges de foudre, son image Uₘₑₛ soit majorée par la tension d'écrêtage de ladite varistance 15.

Toujours selon ce premier mode de réalisation préférentiel, le moyen d'analyse 12 est conçu pour déterminer une valeur Eₘₑₛ représentative de l'énergie électrique reçue par le composant de protection et le moyen d'activation 14 est agencé pour activer le moyen de déconnexion 6 lorsque ladite valeur Eₘₑₛ représentative de l'énergie reçue par le composant de protection 3 atteint ou dépasse une valeur prédéterminée Eₛₑᵤᵢₗ.

De préférence, on choisira la valeur prédéterminée Eₛₑᵤᵢₗ comme étant sensiblement égale à l'énergie maximale admissible par le composant de protection 3, telle qu'elle figure dans les données fournies par le constructeur dudit composant de protection 3.

De façon particulièrement préférentielle, le moyen d'analyse 12 calcule la valeur Eₘₑₛ représentative de l'énergie reçue par le composant de protection 3 en intégrant le signal Iₘₑₛ représentatif de l'intensité du courant de décharge en fonction du temps t.

Les figures 5a, 5b et 5c schématisent graphiquement le principe de fonctionnement de ce premier mode de réalisation et permettent d'en percevoir immédiatement l'intérêt.

Sur la figure 5a, on a représenté, sur un même graphique dont l'axe des ordonnées correspond à l'intensité du courant de décharge et dont l'axe des abscisses correspond au temps t, une première courbe C_{F} représentative d'un courant de décharge provoqué par une surtension transitoire due à la foudre et une seconde courbe C_{TOV} représentative d'un courant de décharge provoqué par une surtension temporaire, plus durable que la surtension due à la foudre.

En particulier, on constate que la courbe de décharge de foudre C_{F} est caractérisée par l'intensité de son pic I_{PIC} et par sa durée t_{F}, laquelle correspond à la durée d'un phénomène transitoire.

La première courbe C_{F} et la seconde courbe C_{TOV} délimitent respectivement, par rapport à l'axe des abscisses, une première aire A_{F} et une seconde aire A_{TOV.} Lesdites aires correspondent mathématiquement à l'intégrale desdites courbes d'intensité en fonction du temps, c'est-à-dire physiquement à des valeurs représentatives des énergies respectivement reçues par le composant de protection 3.

Dans cet exemple, on considère que la première aire A_{F} correspond sensiblement à l'énergie maximale Eₛₑᵤᵢₗ admissible par le composant de protection 3 et que la superficie de la seconde aire A_{TOV} est égale à celle de la première aire A_{F}, ce qui signifie que la même énergie Eₛₑᵤᵢₗ est fournie dans les deux cas au composant de protection 3. Toutefois, rappelons que si cette énergie peut être dissipée sensiblement sans dommage dans le cas de la première courbe C_{F}, elle traduit en revanche un phénomène destructeur dans le cas de la seconde courbe C_{TOV}.

Sur les figures 5b et 5c, on a représenté, sous forme d'un rectangle, la fenêtre d'intégration mise en oeuvre par le moyen d'analyse 12. Celle-ci est délimitée selon l'axe des ordonnées par la valeur Iₛᵤₚ de bornage de l'intensité Iₘₑₛ, et selon l'axe des abscisses par une durée d'intégration choisie t_{I}.

Sur la figure 5b, on constate que ledit rectangle contient la totalité de la deuxième courbe C_{TOV}, et par conséquent englobe la seconde aire A_{TOV}. Plus précisément, l'intersection du rectangle et de la seconde aire A_{TOV} coïncide avec ladite seconde aire A_{TOV} et présente une superficie égale à cette dernière. En d'autres termes, le résultat de l'intégration de la deuxième courbe C_{TOV} fourni par le moyen d'analyse 12, noté A'_{TOV} et représenté par la zone hachurée, est égal à A_{TOV}, c'est-à-dire que Eₘₑₛ atteint Eₛₑᵤᵢₗ, ce qui provoque l'activation du moyen de déconnexion 6.

Sur la figure 5c, on constate en revanche que le bornage du signal Iₘₑₛ, induit par l'application de la même fenêtre d'intégration, conduit à une troncature de la première courbe C_{F}. Graphiquement, l'intersection du rectangle avec la première aire A_{F} présente une superficie moins étendue que celle de ladite première aire A_{F}. Ainsi, le résultat de l'intégration de la première courbe C_{F} fourni par le moyen d'analyse 12, noté A'_{F} et représenté par la zone hachurée, sera sensiblement inférieur à A_{F} et par conséquent la valeur calculée Eₘₑₛ représentative de l'énergie restera en deçà de la valeur d'énergie admissible Eₛₑᵤᵢₗ, si bien que le moyen d'activation 14 n'activera pas le moyen de déconnexion 6. En d'autres termes, un phénomène transitoire, quelle que soit son amplitude, ne durera pas suffisamment longtemps pour permettre à Eₘₑₛ d'atteindre la valeur critique Eₛₑᵤᵢₗ.

Ainsi, lorsque la valeur Eₘₑₛ représentative de l'énergie électrique reçue par le composant de protection 3 atteint ou dépasse la valeur maximale admissible Eₛₑᵤᵢₗ, le fait de savoir que le signal Iₘₑₛ représentatif de l'intensité du courant de décharge est majoré permet de conclure que la durée de ladite décharge a nécessairement été supérieure à celle d'un phénomène transitoire dû à la foudre.

Il est remarquable que le principe de fonctionnement décrit ci-dessus reste applicable dans le cas où la seconde courbe C_{TOV} dépasse Iₛᵤₚ et/ou t_{I}, c'est-à-dire, graphiquement, lorsque A_{TOV} « *déborde »* du rectangle.

Bien entendu, le bornage du signal représentatif de l'intensité du courant de décharge tel que décrit ci-dessus et l'exploitation par intégration du signal ainsi borné ne sont pas limités à la mise en oeuvre d'une distinction entre surtensions de nature transitoire et surtensions de nature temporaire, mais peuvent également être mis en oeuvre indépendamment en tant que tels, notamment au sein d'un moyen d'analyse 12 destiné à diagnostiquer une quelconque durée caractéristique d'administration à un composant de protection d'une quantité d'énergie prédéterminée.

Ainsi que cela est illustré sur la figure 3, le moyen d'analyse 12 peut avantageusement comporter un composant intégrateur tel qu'un condensateur C₁. Le condensateur est en effet un moyen simple et bon marché de corréler l'intensité au temps car la tension U_{c} à ses bornes correspond à une intégration de l'intensité du courant mis en oeuvre lors de cycles de charge et/ou de décharge.

De façon particulièrement avantageuse, le circuit illustré à la figure 3 comporte des résistances de charge R₁, R₂ qui permettent d'ajuster les constantes de temps caractéristiques du circuit de charge/décharge du condensateur C₁. En d'autres termes, le moyen d'analyse 12 comporte de préférence au moins un élément permettant le réglage de la durée d'intégration t_{I} du signal Iₘₑₛ, tel qu'un ou plusieurs composants résistifs R₁, R₂.

En pratique, on choisira le temps d'intégration tₗ de telle sorte que celui-ci soit compatible d'une part avec une fonction de discrimination des phénomènes transitoires et d'autre part avec un temps de réponse du dispositif 1 qui soit suffisamment court pour garantir que la déconnexion intervienne avant un échauffement dangereux du composant de protection 3 sous l'effet de TOV.

Plus particulièrement, on choisira de préférence ledit temps d'intégration tₗ égal ou strictement supérieur à la durée t_{F} caractéristique des phénomènes transitoires attendus, et inférieur ou égal à une durée arbitraire caractéristiques des TOV, par exemple prise dans la plage basse de durée des TOV.

En d'autres termes, le temps d'intégration choisi sera de préférence situé sensiblement à la frontière entre phénomènes transitoires et phénomènes temporaires.

Par convention, on pourra par exemple choisir ledit temps d'intégration tₗ comme sensiblement égal à deux fois la durée de descente à mi-hauteur d'une onde de choc normalisée.

Ainsi, le temps d'intégration t_{I} sera de préférence sensiblement compris entre 400 µs (microsecondes) et 5 ms (millisecondes), et de façon particulièrement préférentiel entre 500 µs (microsecondes) et 1 ms (milliseconde).

De façon préférentielle, le moyen d'activation sélectif 14 comporte un élément permettant le réglage de la valeur prédéterminée Eₛₑᵤᵢₗ. Dans l'exemple particulier illustré à la figure 3, ce réglage est effectué par un montage potentiométrique R₄, R₅ permettant de définir une tension de référence Uₛₑᵤᵢₗ.

Plus généralement, il est envisageable que les paramètres régissant le fonctionnement du dispositif 1 et plus particulièrement la gestion du moyen de déconnexion 6, notamment Eₛₑᵤᵢₗ, Iₛᵤₚ et t_{I}, soient déterminés de façon définitive par construction. Il est toutefois parfaitement possible de prévoir des moyens de réglage, voire de programmation, permettant un ajustement de ces paramètres aux conditions d'utilisation, par exemple par un technicien chargé de l'installation du dispositif 1.

En outre, le moyen d'activation sélectif 14 comporte de préférence un élément comparateur apte à comparer la valeur Eₘₑₛ représentative de l'énergie électrique reçue par le composant de protection à la valeur prédéterminée Eₛₑᵤᵢₗ. Sur la variante de réalisation préférentielle illustrée à la figure 3, le moyen d'activation sélectif 14 comporte à cet effet un comparateur à hystérésis utilisant un amplificateur opérationnel 17.

Le fonctionnement de la variante de réalisation préférentielle illustrée à la figure 3 va maintenant être brièvement décrit.

Lorsque l'élément de contact 7 est en position de fermeture, la varistance 3 est reliée électriquement à l'installation 2 à protéger.

La varistance 3 est donc susceptible d'être traversée par un courant électrique de décharge I. Plus particulièrement, ledit courant de décharge peut correspondre par exemple à un courant de fuite, plus ou moins important en fonction de l'état de ladite varistance 3, ou encore à un courant lié à l'écrêtage d'une surtension appliquée entre les bornes de raccordement 4, 5.

Le capteur 11 fournit une image de ce courant de décharge sous la forme d'une tension Uₘₑₛ, laquelle est bornée par la varistance d'écrêtage 15. La tension ainsi bornée est ensuite redressée par un moyen redresseur 16, par exemple formée par une ou plusieurs diodes, et est susceptible de contribuer à la charge progressive du condensateur C₁ à travers la résistance de charge R1. La charge du condensateur C1 fait apparaître et croître une tension U_{c} aux bornes de celui-ci.

La tension U_{c} est appliquée à l'entrée non inverseuse d'un amplificateur opérationnel 17 qui fonctionne en régime saturé et compare la tension U_{c} aux bornes du condensateur C₁, laquelle correspond à la valeur Eₘₑₛ, avec une tension de référence Uₛₑᵤᵢₗ, qui correspond à la valeur Eₛₑᵤᵢₗ.

Le signe du signal Uₛ de sortie de l'amplificateur opérationnel 17 dépend du résultat de ladite comparaison. En particulier, lorsque U_{c} atteint ou dépasse Uₛₑᵤᵢₗ, la tension de sortie de l'amplificateur opérationnel Uₛ change de signe.

Ce basculement permet alors de commander l'activation de l'actionneur 8 et par conséquent l'ouverture de l'élément de contact 7 qui conduit à l'isolation de la varistance 3.

Selon une variante de réalisation illustrée sur la figure 4, il est possible d'adjoindre au moyen d'acquisition 10 et au moyen d'analyse 12 un circuit supplémentaire de surveillance de la température θ du composant de protection 3.

Celui-ci comprend un capteur thermosensible 18, tel qu'un thermocouple, capable de mesurer les effets de la conversion de l'énergie électrique reçue par ledit composant de protection 3 en énergie thermique.

De façon avantageuse, les différents moyens de détection pourront être reliés au même moyen de déconnexion 6 commun, par exemple à l'aide d'un moyen de comparaison utilisant une fonction booléenne de type « OU ». Ainsi, l'activation du moyen de déconnexion pourra être opérée soit en cas d'échauffement de la varistance 3, soit en cas d'apparition d'un courant jugé dangereux, soit lors d'une combinaison de ces deux cas.

Bien entendu, le dispositif 1 pourra mettre en oeuvre, sans sortir du cadre de l'invention, des moyens analogiques, numériques, ou combinant ces deux technologies, notamment pour réaliser les fonctions d'acquisition, d'analyse, d'activation, de réglage ou de programmation.

Selon une variante de réalisation, le moyen de déconnexion 6 peut être agencé de telle sorte que, lors de son activation, il opère une déconnexion réversible du composant de protection 3.

Une telle disposition pourrait avantageusement être mise en oeuvre au sein d'un dispositif 1 de conception modulaire, susceptible d'être réarmé après remplacement du composant de protection 3 défectueux. En particulier, l'utilisation d'une embase contenant les moyens d'acquisition 10, d'analyse 12, d'activation 14 et de déconnexion 6 sur laquelle pourraient venir se fixer une ou plusieurs cartouches contenant un ou plusieurs composant de protection 3 permettrait d'éviter d'avoir à remplacer l'ensemble du dispositif 1 trop fréquemment.

Selon une variante de réalisation préférentielle, la réversibilité de la déconnexion peut avantageusement être mise en oeuvre automatiquement pour permettre au dispositif 1 d'assurer la préservation du composant de protection 3. Plus précisément, il est ainsi envisageable de déconnecter ce dernier en cas d'exposition à des conditions de fonctionnement susceptibles de provoquer sa dégradation prématurée, notamment en cas de TOV, puis de reconnecter ledit composant de protection à l'installation afin de garantir la continuité de la protection contre les surtensions transitoires.

Selon cette variante, le dispositif 1 comprend de préférence un moyen de réarmement automatique conçu pour provoquer la re-connexion du composant de protection 3. De préférence, ledit moyen de réarmement coopère avec le moyen de déconnexion 6 pour rétablir la connexion en rappelant l'élément de contact 7 de sa position d'ouverture à sa position de fermeture.

Plus précisément, le moyen d'actionnement 8 peut être formé par un relais dont le changement d'état - réversible - est commandé par le changement de signe du comparateur à hystérésis 17. Le rétablissement de la connexion peut alors intervenir lorsque le condensateur C1 s'est suffisamment déchargé.

Selon une variante de réalisation non représentée, le dispositif 1 comprend un moyen de maintien hors-service conçu pour empêcher la re-connexion du composant de protection 3 par le moyen de réarmement automatique tant que la tension aux bornes du dispositif 1, à l'origine de la déconnexion du composant de protection 3, conserve un niveau supérieur à une tension de sécurité prédéterminée.

Ainsi, on peut notamment éviter, lorsqu'une surtension temporaire se prolonge sur plusieurs secondes, tout phénomène d'oscillation rapide lié à des alternances rapprochées entre état de connexion et état de déconnexion, un tel phénomène étant en effet susceptible de provoquer une usure prématurée du moyen d'actionnement 8 et/ou de l'élément de contact 7.

A cet effet, le dispositif 1 peut par exemple comporter un organe de mesure de tension relié aux moyens de raccordement électrique 4, 5, ainsi qu'un circuit comparateur apte à comparer la tension aux bornes du dispositif 1 à une valeur seuil de sécurité et à fournir un signal de sortie, par exemple à une porte logique, qui conditionne, et notamment qui suspend, la restauration de la connexion par le moyen de réarmement.

Ainsi, le dispositif conforme à l'invention peut procéder à une suspension (ou interruption) provisoire de service, pendant laquelle il laisse une surtension temporaire affecter l'installation, puis à une reprise active de la protection. En d'autres termes, le dispositif 1 peut avantageusement constituer un moyen de protection exclusif contre les surtensions transitoires.

Enfin, il est également envisageable de compléter le dispositif 1 conforme à l'invention par un ou plusieurs moyens de déconnexion thermiques passifs, notamment exclusivement thermomécaniques, tels que ceux employant une soudure fusible retenant un élément de contact de type lame ressort précontraint vers sa position d'ouverture. Cette redondance de moyens de déconnexion permet avantageusement de disposer, en cas de défaillance inopinée des moyens d'acquisition, d'analyse ou de déconnexion conformes à l'invention, d'une solution de secours permettant isoler, même tardivement, le composant de protection en cas d'échauffement excessif de ce dernier.

Un procédé de surveillance conforme à l'invention va maintenant être décrit.

Selon l'invention, ledit procédé de surveillance d'un dispositif de protection 1 d'une installation électrique 2 contre les surtensions comportant d'une part au moins un composant de protection 3 destiné à être raccordé à ladite installation électrique 2 telle qu'une varistance, ledit composant de protection 3 étant susceptible d'être traversé par un courant électrique de décharge lorsqu'il est raccordé à l'installation électrique 2, et d'autre part un moyen de déconnexion 6 apte, lorsqu'il est activé, à déconnecter ledit composant de protection 3 de ladite installation électrique 2, comporte :
- une étape (a) d'acquisition au cours de laquelle on acquiert un signal Iₘₑₛ représentatif de l'intensité dudit courant de décharge en fonction du temps t,
- une étape (b) d'analyse au cours de laquelle on applique un traitement audit signal Iₘₑₛ de manière à pouvoir déterminer si le courant de décharge est de nature transitoire ou temporaire,
- une étape (c) d'activation sélective au cours de laquelle on active ou non le moyen de déconnexion 6 en fonction de la nature du courant de décharge déterminée lors de l'étape (b) d'analyse.

Selon une première variante de mise en oeuvre s'appliquant de préférence à un dispositif 1 conforme au premier mode de réalisation décrit ci-dessus, on bornera, lors de l'étape (b) d'analyse, la valeur du signal Iₘₑₛ représentatif de l'intensité du courant de décharge de telle sorte que ladite valeur ne puisse excéder un maximum Iₛᵤₚ.

En outre, on détermine de préférence, lors de l'étape (b) d'analyse, une valeur Eₘₑₛ représentative de l'énergie électrique reçue par le composant de protection 3, ladite valeur Eₘₑₛ représentative de l'énergie reçue par le composant de protection 3 étant de préférence calculée en intégrant le signal Iₘₑₛ représentatif de l'intensité en fonction du temps t.

De façon préférentielle, lors de l'étape (c) d'activation sélective, on compare la valeur Eₘₑₛ représentative de l'énergie électrique reçue par le composant de protection 3 à une valeur prédéterminée Eₛₑᵤᵢₗ et l'on active le moyen de déconnexion 6 si ladite valeur Eₘₑₛ représentative de l'énergie reçue par le composant de protection 3 dépasse ladite valeur prédéterminée Eₛₑᵤᵢₗ.

Avantageusement, le traitement du signal Iₘₑₛ par bornage supérieur permet en effet de tirer de la grandeur *Eₘₑₛ*= *∫_{tI} Imes. dt* une information sur la durée du phénomène vecteur de l'énergie reçue par le composant de protection 3.

En d'autres termes, la double condition nécessaire à la déconnexion, portant d'une part sur le franchissement d'un seuil énergie reçue par le composant de protection 3, et d'autre part sur les modalités d'apport de cette énergie permet de conclure quant au caractère néfaste de la décharge pour ledit composant de protection 3.

Avantageusement, on choisit le temps d'intégration t_{I}, du signal Iₘₑₛ représentatif de l'intensité du courant de décharge comme supérieur ou égal à la durée caractéristique t_{F} des phénomènes de surtensions transitoires, et inférieur ou égal à une durée caractéristique des surtensions temporaires appartenant à la plage basse des durées des surtensions temporaires, ledit temps d'intégration t_{I} étant de préférence choisi dans la plage comprise entre 400 microsecondes et 5 millisecondes, et de façon particulièrement préférentielle dans la plage comprise entre 500 microsecondes et 1 milliseconde.

Ainsi, dans cette mise en oeuvre, le procédé de surveillance conforme à l'invention permet avantageusement de déterminer, lors de l'étape (b) d'analyse, si le composant de protection 3 est traversé par un courant de décharge de nature transitoire ou par un courant de décharge de nature plus durable, notamment temporaire.

De façon particulièrement avantageuse, ce procédé permet donc d'opérer une discrimination en assortissant l'analyse du signal Iₘₑₛ représentatif de l'intensité du courant de décharge qui traverse ledit composant de protection 3 de critères restrictifs, de telle sorte que seuls des phénomènes plus durables que les phénomènes transitoires, et en particulier des phénomènes temporaires (TOV), sont susceptibles de remplir les conditions nécessaires au déclenchement de la déconnexion.

Ainsi, lors de l'étape (c) d'activation sélective, il est possible de ne pas activer, ou d'inhiber, le moyen de déconnexion 6 si l'étape (b) d'analyse détermine que le courant de décharge est de nature transitoire.

De façon particulièrement préférentielle, les étapes (a), (b) et (e) sont réalisées sensiblement en continu lors du fonctionnement du dispositif 1, de manière à minimiser le temps de latence entre l'apparition d'un courant dangereux et l'activation du moyen de déconnexion.

En particulier, la mise en oeuvre de la variante de réalisation illustrée sur la figure 3 permet une intégration « *glissante »* de Iₘₑₛ et une activation quasi-immédiate du moyen de déconnexion lorsque Uₘₑₛ franchit Uₛₑᵤᵢₗ.

De façon particulièrement avantageuse, le dispositif 1 conforme à l'invention permet donc d'établir très rapidement un diagnostic de l'état du composant de protection 3 et ainsi de procéder si nécessaire à une mise en sécurité dudit dispositif 1 particulièrement précoce.

De plus, la gestion fine du processus de déconnexion basée sur une identification de la nature du phénomène électrique affectant le composant de protection 3 et sur l'adaptation de la réponse du dispositif 1 selon que ledit phénomène est de nature transitoire ou de nature plus durable, notamment temporaire, permet une déconnexion à bon escient. En particulier, on peut ainsi prévenir une ouverture inopportune du circuit de décharge alors que celui-ci écoule une intensité très élevée provoquée par une surtension due à la foudre.

Ainsi, le dispositif 1 conforme à l'invention cumule les deux avantages d'un très faible temps de réaction, lequel permet une mise en sécurité quasi-immédiate en cas de défaillance du composant de protection, et d'une préservation du pouvoir de décharge dudit dispositif, dans la mesure où il est possible de faire travailler le composant de protection jusqu'à la limite extrême de ses capacités.

Par ailleurs, l'activation rapide du moyen de déconnexion 6 peut permettre d'isoler le composant de protection 3 alors que les conditions de tension et/ou de courant n'ont pas encore atteint le seuil à partir duquel un arc électrique est susceptible de s'amorcer lors de la séparation des parties conductrices du moyen de contact 7. Ainsi, un réglage approprié du dispositif conforme à l'invention permet d'assurer une séparation nette et sûre sans formation d'un arc électrique qui prolongerait la circulation d'un courant dangereux ou, le cas échéant, dans des conditions propices à l'extinction rapide d'un arc électrique éventuellement formé.

De façon particulièrement avantageuse, un dispositif 1 conforme à l'invention est adapté non seulement à la déconnexion du composant de protection en cas d'emballement thermique en fin de vie de celui-ci, mais également, à la différence des moyens de déconnexion thermiques connus, en cas de défaillance brusque liée par exemple à l'application d'une TOV.

## Revendications

1. Dispositif de protection (1) d'une installation électrique (2) contre les surtensions comportant d'une part au moins un composant de protection (3) destiné à être raccordé à ladite installation électrique (2),
tel qu'une varistance, ledit composant de protection (3) étant susceptible d'être traversé par un courant électrique de décharge lorsqu'il est raccordé à l'installation électrique (2), et d'autre part un moyen de déconnexion (6) apte, lorsqu'il est activé, à déconnecter ledit composant de protection (3) de ladite installation électrique (2), **caractérisé en ce qu'**il comprend :
- un moyen d'acquisition (10) apte à fournir un signal (Iₘₑₛ) représentatif de l'intensité dudit courant de décharge en fonction du temps (t) ;
- un moyen d'analyse (12) permettant d'appliquer un traitement audit signal (Iₘₑₛ) de manière à pouvoir déterminer si le courant de décharge est de nature transitoire ou de nature temporaire, le moyen d'analyse étant conçu pour effectuer un bornage supérieur du signal (Iₘₑₛ) représentative de l'intensité du courant de décharge, la valeur dudit signal ne pouvant alors excéder un maximum noté (Iₛᵤₚ);
- un moyen d'activation sélectif (14) apte à activer ou non le moyen de déconnexion (6) en fonction de la nature du courant de décharge déterminée par le moyen d'analyse,
dans lequel le moyen d'analyse (12) est conçu pour déterminer une valeur (Eₘₑₛ) représentative de l'énergie électrique reçue par le composant de protection (3) et **en ce que** le moyen d'activation sélectif (14) est agencé pour activer le moyen de déconnexion (6) lorsque ladite valeur (Eₘₑₛ) représentative de l'énergie reçue par le composant de protection (3) dépassse une valeur prédéterminée (Eₛₑᵤᵢₗ).

2. Dispositif selon la revendication 1 **caractérisé en ce que** le moyen d'acquisition (10) fournit le signal (Imes) représentatif de l'intensité du courant qui traverse le composant de protection sous la forme d'une tension électrique (Urnes) et **en ce que** le moyen d'analyse (12) comprend un élément limiteur de tension, tel qu'une varistance d'écrêtage (15), afin d'empêcher la valeur de ladite tension de dépasser une valeur maximale prédéterminée.

3. Dispositif selon l'une quelconque des revendications 1 ou 2, **caractérisé en ce que** le moyen d'analyse (12) calcule la valeur (Emes) représentative de l'énergie reçue par le composant de protection (3) en intégrant le signal (Imes) représentatif de l'intensité en fonction du temps (t).

4. Dispositif selon la revendication 3 **caractérisé en ce que** le moyen d'analyse (12) comporte un composant intégrateur tel qu'un condensateur (C1).

5. Dispositif selon l'une des revendications 3 ou 4 **caractérisé en ce que** le moyen d'analyse comporte un élément permettant le réglage de la durée d'intégration (t1) du signal (Imes), tel qu'un ou plusieurs composants résistifs (R1, R2).

6. Dispositif selon l'une des revendications 3 à 5 **caractérisé en ce que** le temps d'intégration (tI) du signal (Imes) représentatif de l'intensité du courant de décharge est supérieur ou égal à la durée caractéristique (tF) des phénomènes de surtensions transitoires et inférieur ou égal à une durée caractéristique des surtensions temporaires appartenant à la plage basse des durées des surtensions temporaires.

7. Dispositif selon la revendication 6 **caractérisé en ce que** le temps d'intégration (tl) est sensiblement compris entre 400 microsecondes et 5 millisecondes, et de préférence entre 500 microsecondes et 1 milliseconde.

8. Dispositif selon l'une des revendications 1 à 7 **caractérisé en ce que** le moyen d'activation sélectif (14) comporte un élément permettant le réglage de la valeur prédéterminée (Eₛₑᵤᵢₗ).

9. Dispositif selon l'une des revendications précédentes **caractérisé en ce que** le moyen d'activation sélectif (14) n'active pas le moyen de déconnexion (6) lorsque le moyen d'analyse (12) détermine que le courant de décharge est de nature transitoire.

10. Dispositif selon l'une des revendications précédentes **caractérisé en ce que** le moyen de déconnexion (6) est agencé pour pouvoir opérer une déconnexion réversible du composant de protection (3).

11. Dispositif selon la revendication 10 **caractérisé en ce qu'**il comprend un moyen de réarmement automatique conçu pour provoquer la re-connexion du composant de protection (3).

12. Dispositif selon la revendication 11 **caractérisé en ce qu'**il comprend un moyen de maintien hors-service conçu pour empêcher la re-connexion du composant de protection (3) par le moyen de réarmement automatique tant que la tension aux bornes du dispositif (1), à l'origine de la déconnexion du composant de protection (3), conserve un niveau supérieur à une tension de sécurité prédéterminée.

13. Dispositif selon l'une des revendications précédentes **caractérisé en ce qu'**il constitue un dispositif de protection contre les surtensions transitoires dues à la foudre.

14. Dispositif selon l'une des revendications précédentes **caractérisé en ce que** le composant de protection (3) est formé par une varistance.

15. Procédé de surveillance d'un dispositif de protection (1) d'une installation électrique (2) contre les surtensions comportant d'une part au moins un composant de protection (3) destiné à être raccordé à ladite installation électrique (2), tel qu'une varistance, ledit composant de protection (3) étant susceptible d'être traversé par un courant électrique de décharge lorsqu'il est raccordé à l'installation électrique (2), et d'autre part un moyen de déconnexion (6) apte, lorsqu'il est activé, à déconnecter ledit composant de protection (3) de ladite installation électrique (2), **caractérisé en ce qu'**il comporte :
- une étape (a) d'acquisition au cours de laquelle on acquiert un signal (Iₘₑₛ) représentatif de l'intensité dudit courant de décharge en fonction du temps (t),
- une étape (b) d'analyse au cours de laquelle on applique un traitement audit signal (Iₘₑₛ) de manière à pouvoir déterminer si le courant de décharge est de nature transitoire ou de nature temporaire et on borne la valeur du signal (Iₘₑₛ) représentatif de l'intensité du courant de décharge de telle sorte que ladite valeur ne puisse excéder un maximum noté (Iₛᵤₚ),
- une étape (c) d'activation sélective au cours de laquelle on active ou non le moyen de déconnexion (6) en fonction de la nature du courant de décharge déterminée lors de l'étape (b) d'analyse,
dans lequel lors de l'étape (b) d'analyse, on détermine une valeur (Eₘₑₛ) représentative de l'énergie électrique reçue par le composant de protection (3) et **en ce que**, lors de l'étape (c) d'activation sélective, on compare ladite valeur (Eₘₑₛ) représentative de l'énergie électrique reçue par le composant de protection (3) à une valeur prédéterminée (Eₛₑᵤᵢₗ) et l'on active le moyen de déconnexion (6) si ladite valeur (Eₘₑₛ) représentative de l'énergie reçue par le composant de protection (3) dépasse ladite valeur prédéterminée (Eₘₑₛ).

16. Procédé selon la revendication 15 **caractérisé en ce que**, lors de l'étape (b) d'analyse, on calcule la valeur (Eₘₑₛ) représentative de l'énergie reçue par le composant de protection en intégrant le signal (Iₘₑₛ) représentatif de l'intensité en fonction du temps (t).

17. Procédé selon la revendication 16 **caractérisé en ce que** l'on choisit le temps d'intégration (tᵢ) du signal (Iₘₑₛ) représentatif de l'intensité du courant de décharge comme supérieur ou égal à la durée caractéristique (t_{F}) des phénomènes de surtensions transitoires, et inférieur ou égal à une durée caractéristique des surtensions temporaires appartenant à la plage basse des durées des surtensions temporaires, ledit temps d'intégration (tl) étant de préférence choisi dans la plage comprise entre 400 microsecondes et 5 millisecondes, et de façon particulièrement préférentielle dans la plage comprise entre 500 microsecondes et 1 milliseconde.

18. Procédé selon l'une des revendications 15 à 17 **caractérisé en ce que**, lors de l'étape (c) d'activation sélective, on n'active pas le moyen de déconnexion si l'étape (b) d'analyse détermine que le courant de décharge est de nature transitoire.

## Patentansprüche

1. Vorrichtung (1) zum Schutz einer elektrischen Anlage (2) gegen Überspannungen, die mindestens ein Schutzbauteil (3), das dazu bestimmt ist, an die elektrische Anlage (2) angeschlossen zu werden,
wie einen Varistor, wobei das Schutzbauteil (3) durch einen elektrischen Entladestrom durchquert werden kann, wenn es an die elektrische Anlage (2) angeschlossen ist, und ein Trennungsmittel (6) umfasst, das, wenn es aktiviert ist, geeignet ist, das Schutzbauteil (3) von der elektrischen Anlage (2) zu trennen, **dadurch gekennzeichnet, dass** sie Folgendes umfasst:
- ein Erfassungsmittel (10), das geeignet ist, ein Signal (Iₘₑₛ) zu liefern, das für die Stärke des Entladestroms als Funktion der Zeit (t) charakteristisch ist;
- ein Analysemittel (12), das das Anwenden einer Verarbeitung auf das Signal (Iₘₑₛ) ermöglicht, derart, dass bestimmt werden kann, ob der Entladestrom transienter oder temporärer Art ist, wobei das Analysemittel ausgelegt ist, um eine obere Begrenzung des Signals (Iₘₑₛ) durchzuführen, das für die Stärke des Entladestroms charakteristisch ist, wobei der Wert des Signals dann ein notiertes Maximum (Iₛᵤₚ) nicht überschreiten kann;
- ein selektives Aktivierungsmittel (14), das geeignet ist, das Trennungsmittel (6) in Abhängigkeit von der durch das Analysemittel bestimmten Art des Entladestroms zu aktivieren oder nicht,
wobei das Analysemittel (12) ausgelegt ist, um einen Wert (Eₘₑₛ) zu bestimmen, der für die durch das Schutzbauteil (3) empfangene elektrische Energie charakteristisch ist, und dadurch, dass das selektive Aktivierungsmittel (14) angeordnet ist, um das Trennungsmittel (6) zu aktivieren, wenn der Wert (Eₘₑₛ), der für die durch das Schutzbauteil (3) empfangene Energie charakteristisch ist, einen vorbestimmten Wert (Eₛₑᵤᵢₗ) überschreitet.

2. Vorrichtung nach Anspruch 1, **dadurch gekennzeichnet, dass** das Erfassungsmittel (10) das Signal (Imes) liefert, das für die Stärke des Stroms charakteristisch ist, der das Schutzbauteil unter der Form einer elektrischen Spannung (Urnes) durchquert, und dadurch dass das Analysemittel (12) ein Spannungsbegrenzerelement, wie einen Spitzenbegrenzungsvaristor (15), umfasst, um zu verhindern, dass der Wert der Spannung einen vorbestimmten Höchstwert überschreitet.

3. Vorrichtung nach einem der Ansprüche 1 oder 2, **dadurch gekennzeichnet, dass** das Analysemittel (12) den Wert (Emes), der für die durch das Schutzbauteil (3) empfangene Energie charakteristisch ist, durch Integrieren des Signals (Imes), das für die Stärke charakteristisch ist, als Funktion der Zeit (t) berechnet.

4. Vorrichtung nach Anspruch 3, **dadurch gekennzeichnet, dass** das Analysemittel (12) ein Integratorbauteil, wie einen Kondensator (C1), umfasst.

5. Vorrichtung nach einem der Ansprüche 3 oder 4, **dadurch gekennzeichnet, dass** das Analysemittel ein Element umfasst, das die Regelung der Integrationsdauer (t1) des Signals (Imes) ermöglicht, wie beispielsweise ein oder mehrere Bauteile mit Widerstand (R1, R2).

6. Vorrichtung nach einem der Ansprüche 3 bis 5, **dadurch gekennzeichnet, dass** die Integrationszeit (tI) des Signals (Imes), das für die Stärke des Entladestroms charakteristisch ist, größer oder gleich der charakteristischen Dauer (tF) der transienten Überspannungsphänomene ist und kleiner oder gleich einer charakteristischen Dauer der temporären Überspannungen ist, die zum niedrigen Bereich der temporären Überspannungen gehören.

7. Vorrichtung nach Anspruch 6, **dadurch gekennzeichnet, dass** die Integrationszeit (tI) im Wesentlichen zwischen 400 Mikrosekunden und 5 Millisekunden und vorzugsweise zwischen 500 Mikrosekunden und 1 Millisekunde enthalten ist.

8. Vorrichtung nach einem der Ansprüche 1 bis 7, **dadurch gekennzeichnet, dass** das selektive Aktivierungsmittel (14) ein Element umfasst, das die Regelung des vorbestimmten Wertes (Eₛₑᵤᵢₗ) ermöglicht.

9. Vorrichtung nach einem der vorhergehenden Ansprüche, **dadurch gekennzeichnet, dass** das selektive Aktivierungsmittel (14) das Trennungsmittel (6) nicht aktiviert, wenn das Analysemittel (12) bestimmt, dass der Entladestrom transienter Art ist.

10. Vorrichtung nach einem der vorhergehenden Ansprüche, **dadurch gekennzeichnet, dass** das Trennungsmittel (6) angeordnet ist, um eine reversible Trennung des Schutzbauteils (3) ausführen zu können.

11. Vorrichtung nach Anspruch 10, **dadurch gekennzeichnet, dass** sie ein automatisches Wiedereinschaltungsmittel umfasst, das ausgebildet ist, um die erneute Verbindung des Schutzbauteils (3) zu bewirken.

12. Vorrichtung nach Anspruch 11, **dadurch gekennzeichnet, dass** sie ein Mittel zum Außerbetriebhalten umfasst, das ausgebildet ist, um die erneute Verbindung des Schutzbauteils (3) durch das automatische Wiedereinschaltungsmittel zu verhindern, solange die Spannung an den Anschlüssen der Vorrichtung (1), die Ursache der Trennung des Schutzbauteils (3) ist, einen Pegel bewahrt, der höher ist als eine vorbestimmte Sicherheitsspannung.

13. Vorrichtung nach einem der vorhergehenden Ansprüche, **dadurch gekennzeichnet, dass** sie eine Vorrichtung zum Schutz gegen transiente Überspannungen aufgrund von Blitzen bildet.

14. Vorrichtung nach einem der vorhergehenden Ansprüche, **dadurch gekennzeichnet, dass** das Schutzbauteil (3) durch einen Varistor gebildet ist.

15. Verfahren zur Überwachung einer Vorrichtung (1) zum Schutz einer elektrischen Anlage (2) gegen Überspannungen, die mindestens ein Schutzbauteil (3), das dazu bestimmt ist, an die elektrische Anlage (2) angeschlossen zu werden, wie einen Varistor, wobei das Schutzbauteil (3) durch einen elektrischen Entladestrom durchquert werden kann, wenn es an die elektrische Anlage (2) angeschlossen ist, und ein Trennungsmittel (6) umfasst, das, wenn es aktiviert ist, geeignet ist, das Schutzbauteil (3) von der elektrischen Anlage (2) zu trennen, **dadurch gekennzeichnet, dass** sie Folgendes umfasst:
- einen Erfassungsschritt (a), während dem ein Signal (Iₘₑₛ) erfasst wird, das für die Stärke des Entladestroms als Funktion der Zeit (t) charakteristisch ist,
- einen Analyseschritt (b), während dem eine Verarbeitung auf das Signal (Iₘₑₛ) angewandt wird, derart, dass bestimmt werden kann, ob der Entladestrom transienter oder temporärer Art ist, und der Wert des Signals (Iₘₑₛ), das für die Stärke des Entladestroms charakteristisch ist, derart begrenzt wird, dass der Wert ein notiertes Maximum (Iₛᵤₚ) nicht überschreiten kann;
- einen selektiven Aktivierungsschritt (c), während dem das Trennungsmittel (6) in Abhängigkeit von der beim Analyseschritt (b) bestimmten Art des Entladestroms aktiviert wird oder nicht,
wobei im Analyseschritt (b) ein Wert (Eₘₑₛ) bestimmt wird, der für die durch das Schutzbauteil (3) empfangene elektrische Energie charakteristisch ist, und dadurch, dass beim Schritt (c) der selektiven Aktivierung der Wert (Eₘₑₛ), der für die durch das Schutzbauteil (3) empfangene Energie charakteristisch ist, mit einem vorbestimmten Wert (Eₛₑᵤᵢₗ) verglichen wird und das Trennungsmittel (6) aktiviert wird, wenn der Wert (Eₘₑₛ), der für die durch das Schutzbauteil (3) empfangene Energie charakteristisch ist, den vorbestimmten Wert (Eₘₑₛ) überschreitet.

16. Verfahren nach Anspruch 15, **dadurch gekennzeichnet, dass** beim Analyseschritt (b) der Wert (Eₘₑₛ), der für die Energie charakteristisch ist, die durch das Schutzbauteil empfangen wird, durch Integrieren des Signals (Iₘₑₛ), das für die Stärke charakteristisch ist, als Funktion der Zeit (t) berechnet wird.

17. Verfahren nach Anspruch 16, **dadurch gekennzeichnet, dass** die Integrationszeit (tᵢ) des Signals (Iₘₑₛ), das für die Stärke des Entladestroms charakteristisch ist, als größer oder gleich der charakteristischen Dauer (t_{F}) der transienten Überspannungsphänomene und kleiner oder gleich einer charakteristischen Dauer der temporären Überspannungsphänomene, die zum niedrigen Bereich der temporären Überspannungsdauern gehören, ausgewählt wird, wobei die Integrationszeit (tI) vorzugsweise im Bereich, der zwischen 400 Mikrosekunden und 5 Millisekunden enthalten ist, und besonders zu bevorzugen im Bereich ausgewählt wird, der zwischen 500 Mikrosekunden und 1 Millisekunde enthalten ist.

18. Verfahren nach einem der Ansprüche 15 bis 17, **dadurch gekennzeichnet, dass** beim Schritt (c) der selektiven Aktivierung das Trennungsmittel nicht aktiviert wird, wenn der Analyseschritt (b) bestimmt, dass der Entladestrom transienter Art ist.

## Claims

1. A device (1) for protecting an electrical installation (2) against voltage surges comprising, at least one protective component (3) for connection to said electrical installation (2), such as a varistor, said protective component (3) being capable of being traversed by an electric discharge current when it is connected to the electrical installation (2), and, disconnection means (6) adapted, when activated, to disconnect said protective component (3) from said electrical installation (2), **characterized in that** it comprises:
- acquisition means (10) able to supply a signal (Iₘₑₛ) representative of the strength of said discharge current as a function of time (t);
- analyzing means (12) for applying processing to said signal (Iₘₑₛ) so as to determine whether the discharge current is transient in nature or of a temporary nature, the analyzing means being adapted to apply an upper ceiling value to said signal (Iₘₑₛ) representing the strength of the discharge current, the value of said signal then not being allowed to exceed a maximum value (Iₛᵤₚ);
- selective activation means (14) adapted to activate or not activate the disconnection means (6) depending on the nature of the discharge current determined by the analyzing means,
wherein the analyzing means (12) are adapted to determine a value (Eₘₑₛ) representative of the electrical energy received by the protective component (3) and wherein the selective activation means (14) are arranged to activate the disconnection means (6) when said value (Eₘₑₛ) representative of the energy received by the protective component(3) exceeds a predetermined value (Eₛₑᵤᵢₗ).

2. The device according to claim 1 **characterized in that** the acquisition means (10) supply the signal (Iₘₑₛ) representative of the strength of the current flowing through the protective component in the form of a voltage (Uᵣₙ) and **in that** the analyzing means (12) comprises a voltage-limiting element, such as a clipping varistor (15) to prevent the value of said voltage exceeding a predetermined maximum value.

3. The device according to any one of claims 1 or 2, **characterized in that** the analyzing means (12) calculate the value (Eₘₑₛ) representative of the energy received by the protective component (3) by integrating the signal (Iₘₑₛ) representative of the strength of the current as a function of time (t).

4. The device according to claim 3 **characterized in that** the analyzing means (12) comprise an integrating component such as a capacitor (C1).

5. The device according to one of Claims 3 or 4 **characterized in that** the analyzing means comprise an element for adjusting the period of integration (t1) of the signal (Iₘₑₛ), such as one or more resistive components (R1, R2).

6. The device according to one of claims 3 to 5 **characterized in that** the period of integration (tI) of the signal (Iₘₑₛ) representative of the strength of the discharge current is greater than or equal to a duration (tF) that is characteristic of the phenomena of transient voltage surges and less than or equal to a duration typical of temporary voltage surges falling within the low range of the durations of temporary voltage surges.

7. The device according to claim 6 **characterized in that** the period of integration (ti) is substantially comprised between 400 microseconds and 5 milliseconds, and preferably between 500 microseconds and 1 millisecond.

8. The device according to one of claims 1 to 7 **characterized in that** the selective activation means (14) include an element for adjusting the predetermined value (Eₛₑᵤᵢₗ).

9. The device according to one of the preceding claims, **characterized in that** the selective activation means (14) do not activate the disconnecting means (6) when the analyzing means (12) determine that the discharge current is transient in nature.

10. The device according to one of the preceding claims, **characterized in that** the disconnection means (6) are arranged to be able to perform reversible disconnection of the protective component (3).

11. The device according to claim 10 **characterized in that** it comprises automatic resetting means adapted to cause the protective component (3) to be re-connected.

12. The device according to claim 11 **characterized in that** it comprises cutout maintaining means designed to prevent the protective component (3) being reset by the automatic reset means as long as the voltage across the device (1), which lead to disconnection of the protective component (3) is maintaining a level that is higher than a predetermined safety voltage.

13. The device according to one of the preceding claims **characterized in that** it constitutes a protection device against transient voltage surges due to lightning.

14. The device according to one of the preceding claims **characterized in that** the protective component (3) is formed by a varistor.

15. A method for monitoring a device for protecting (1) an electrical installation (2) against voltage surges comprising, , at least one protective component (3) for connection to said electrical installation (2), such as a varistor, said protective component (3) being capable of being traversed by an electric discharge current when it is connected to the electrical installation (2), and, disconnection means (6) adapted, when activated, to disconnect said protective component (3) from said electrical installation (2), **characterized in that** it comprises:
- a step (a) of acquisition during which a signal (Iₘₑₛ) representative of the strength of said discharge current as a function of time (t) is acquired,
- an analysis step (b) during which said signal (Iₘₑₛ) is processed so as to determine whether the discharge current is transient in nature or of a temporary nature, and an upper ceiling value is applied to said signal (Iₘₑₛ) representative of the strength of the discharge current whereby said value may not exceed a maximum value (Iₛᵤₚ);
- a selective activation step for activating or not activating the disconnection means (6) depending on the nature of the discharge current determined at analysis step (b),
wherein at analysis step (b), a value (Eₘₑₛ) representative of the electrical energy received by the protective component (3) is determined and wherein, at step (c) of selective activation, said value (Eₘₑₛ) representative of the electrical energy received by the protective component (3) is compared with a predetermined value (Eₛₑᵤᵢₗ) and said disconnection means (6) are activated if said value (Eₘₑₛ) representative of the energy received by the protective component (3) exceeds said predetermined value (Eₘₑₛ).

16. The method according to claim 15 **characterized in that**, during step (b) of analysis, the value (Eₘₑₛ) representative of the energy received by the protective component is calculated by integrating the signal (Iₘₑₛ) representative of current strength as a function of time (t).

17. The method according to claim 16 **characterized in that** the period of integration (ti) of the signal (Iₘₑₛ) representative of the strength of the discharge current is selected to be greater than or equal to the characteristic duration (tF) of transient surge phenomena and less than or equal to a duration typical of temporary voltage surges falling within the low range of the durations of temporary voltage surges, said period of integration (ti) being preferably selected in the range of from 400 microseconds to 5 milliseconds, and particularly preferably in the range of from 500 microseconds to 1 millisecond.

18. The method according to one of claims 15 to 17 **characterized in that**, during step (c) of selective activation, the disconnection means are not activated if analysis step (b) determines that the discharge current is transient in nature.
